# EUROPEAN PATENT APPLICATION

(11) **EP 1 162 065 A1**
(43) Date of publication of application: **12.12.2001**
(21) Application number: 01113902.9
(22) Date of filing: 07.06.2001
(51) Int. Cl.: B41F 13/14, G01B 7/02

(54) **Moving amount detection apparatus for movable body**

(30) Priority: 08.06.2000 JP 2000171921
(71) Applicant: Komori Corporation, Sumida-ku Tokyo (JP)
(72) Inventor: Shimokawa, Hiromichi, Toride-shi, Ibaraki (JP)
(74) Representative: Turi, Michael, Dipl.-Phys.

(57) **Abstract**

A moving amount detection apparatus for a movable body includes a press member, detection body, and potentiometer. The press member is provided to either one of a bracket and plate cylinder. The moving amount of the plate cylinder (20) is to be controlled. The detection body (1a) is connected to the press member (8). The potentiometer (1) is provided to the remaining one of the bracket and plate cylinder and detects the moving amount of the plate cylinder on the basis of a displacement of the plate cylinder relative to the detection body. One of the press member and potentiometer displaces in accordance with movement of the plate cylinder.

## Description

### Background of the Invention

The present invention relates to a moving amount detection apparatus for detecting the moving amount of a movable body.

Generally, a printing press has a plate registration unit for moving a plate cylinder in circumferential and lateral directions in order to set the register of a plate mounted on the plate cylinder in the circumferential and lateral directions. A plate registration unit of this type has a detection apparatus for detecting the position of the plate cylinder (movable body) by detecting the moving amount of the plate cylinder. A conventional moving amount detection apparatus for a plate cylinder has a plate cylinder the movement of which can be adjusted in the axial direction, and a direct coupled type potentiometer for linearly detecting the movement of the plate cylinder in the axial direction, as disclosed in Japanese Utility Model Laid-Open No. 64-42135. The direct coupled type potentiometer has a detection body which moves against the spring force of a compression coil spring when it is urged by a press member movable together with the plate cylinder.

In this arrangement, when the motor of the plate registration unit is driven to move the plate cylinder in the axial direction so that the register of the plate cylinder is set, the displacement amount of the detection body which follows the plate cylinder is detected by the direct coupled type potentiometer. Thus, the position of the plate cylinder is detected, and the driving operation of the motor is stopped at a preset position.

In the conventional moving amount detection apparatus described above, when the press member moves in a direction to urge the detection body into the direct coupled type potentiometer, the detection body is directly urged by the press member against the spring force of the compression coil spring. When the press member moves in a direction to extend the detection body from the potentiometer, the detection body extends to follow the spring force of the compression coil spring.

If the moving amount detection apparatus has not been in use for a long period of time, or ink, paper dust, powder, or the like attaches to that portion of the detection body which slides on the potentiometer, sometimes the detection body does not extend correctly despite the spring force of the compression coil spring. More specifically, when the press member moves in a direction to extend the detection body, the detection body does not extend and thus does not follow the movement of the press member. In this case, the moving amount of the detection body cannot be detected correctly, so correct position control of the movable body cannot be performed, and the reliability decreases.

### Summary of the Invention

It is an object of the present invention to provide a moving amount detection apparatus for a movable body, which correctly detects the moving amount of a movable body to enable correct position control of the movable body.

In order to achieve the above object, according to the present invention, there is provided a moving amount detection apparatus for a movable body, comprising an operational member provided to either one of a stationary member and a movable body a moving amount of which is to be controlled, a detection body connected to the operational member, and detection means, provided to the remaining one of the stationary member and the movable body, for detecting the moving amount of the movable body on the basis of a displacement of the movable body relative to the detection body, wherein one of the operational member and the detection member displaces in accordance with movement of the movable body.

### Brief Description of the Drawings

Fig. 1 is a partially cutaway side view of a moving amount detection apparatus for a plate cylinder in a printing press according to an embodiment of the present invention; and
Fig. 2 is a side view showing the main part of the moving amount detection apparatus shown in Fig. 1.

### Description of the Preferred Embodiment

The present invention will be described in detail with reference to the accompanying drawings.

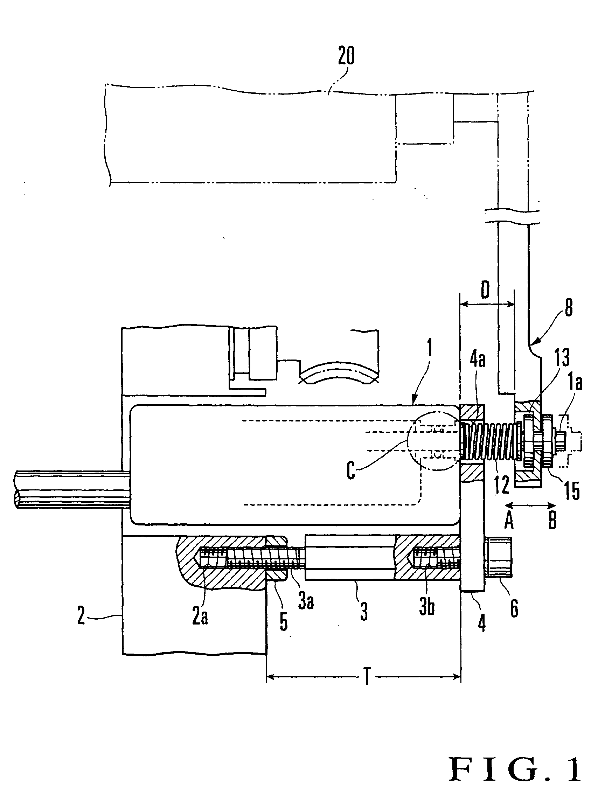

Fig. 1 shows a moving amount detection apparatus for a plate cylinder in a printing press according to an embodiment of the present invention. Referring to Fig. 1, a direct coupled type potentiometer 1 with a circular cylindrical detection body 1a which is linearly movable forward/backward is fixed to a holder 4 through a hexagonal adjuster bolt 3 in a bracket 2 fixed to a frame (not shown), such that a projection height T from the bracket 2 can be adjusted.

The adjuster bolt 3 has a male screw portion 3a formed at its one end and a female screw portion 3b formed at its other end. With the male screw portion 3a of the adjuster bolt 3 threadably engaging with a threaded portion 2a of the bracket 2, when a nut 5 is fastened, the adjuster bolt 3 is fixed to the bracket 2 to be upright from it.

The holder 4 to which the potentiometer 1 is fixed is fixed to the adjuster bolt 3 through a bolt 6 threadably engaging with the female screw portion 3b of the adjuster bolt 3. The holder 4 has a window 4a through which the detection member 1a passes. In this arrangement, when the fastened nut 5 is loosened and the screwed amount of the male screw portion 3a of the adjuster bolt 3 with respect to the threaded portion 2a of the bracket 2 is changed, the projection height T of the adjuster bolt 3 from the bracket 2 can be changed. Therefore, a distance D between the potentiometer 1 and a press member 8 (to be described later) serving as an operational member can be adjusted.

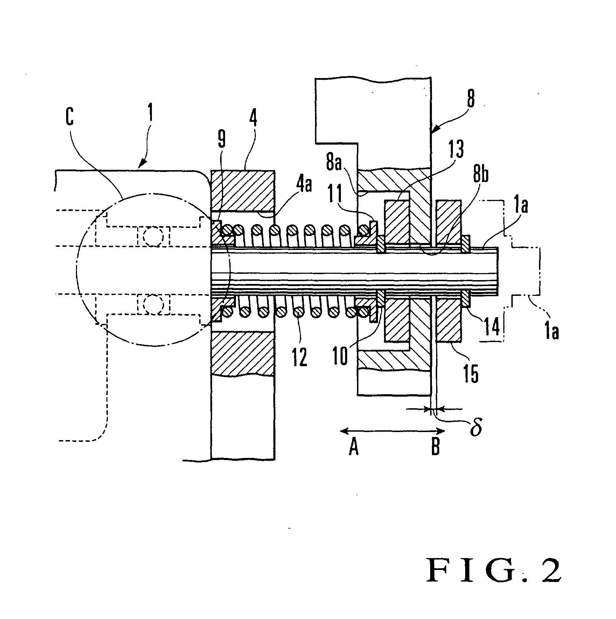

The press member 8 is fixed to the end shaft of a plate cylinder 20, serving as a movable body through a bracket or the like, to oppose the potentiometer 1. When the plate cylinder 20 is moved in the axial direction for the purpose of plate register adjustment, the press member 8 moves (is displaced) together with the plate cylinder 20 in the axial direction (direction of arrows A - B) of the plate cylinder 20. As shown in Fig. 2, the press member 8 has a circular recess 8a in its surface opposing the potentiometer 1, and a through hole 8b, through which the detection body 1a of the potentiometer 1 is to movably extend, is formed in the bottom of the recess 8a. Regarding the coupling arrangement of the plate registration unit, plate cylinder, and press member, the description in Japanese Utility Model Laid-Open No. 64-42135 is incorporated in this specification.

A snap ring 10 is axially mounted around the detection body 1a corresponding to the recess 8a and extending through the through hole 8b, and a washer 13 loosely fitted on the detection body 1a is interposed between the snap ring 10 and the bottom surface of the recess 8a. A pair of spring guides 9 and 11 are slidably supported on the detection body 1a, and a compression coil spring 12 is elastically mounted on the detection body 1a between the spring guides 9 and 11. In this arrangement, the spring force of the compression coil spring 12 urges the spring guide 11 against the snap ring 10 so as to bias the detection body 1a in a direction to separate from the bracket 2. In other words, the detection body 1a of the potentiometer 1 is biased by the spring force of the compression coil spring 12 through the snap ring 10 in an extending direction (direction of arrow B), and is locked by the press member 8 through the washer 13.

A snap ring 14 is axially mounted around the distal end of the detection body 1a projecting from the press member 8. A washer 15 is loosely fitted on the detection body 1a between the snap ring 14 and press member 8, and a clearance δ is set between the washer 15 and press member 8. When the snap rings 10 and 14 are mounted to be erroneously inclined with respect to a direction perpendicular to the detection body 1a, the clearance δ prevents the press member 8 from being inclined. In other words, the backlash caused by inclination of the snap rings 10 and 14 is absorbed by the clearance δ and does not adversely affect the press member 8.

In this arrangement, along with movement of the press member 8, when the press member 8 urges the washer 15 as will be described later, or when the washer 13 urges the press member 8, the detection body 1a is not inclined with respect to the axial direction. Hence, an excessive load can be prevented from acting on the detection body 1a to fracture it. Since the detection body 1a moves in the axial direction, it can move smoothly, and the accurate moving amount of the press member 8 can be detected.

The operation of the moving amount detection apparatus with the above arrangement will be described.

When a motor (not shown) is driven by a control unit (not shown) in order to perform register adjustment of the plate cylinder 20, the press member 8 also moves together with the plate cylinder 20 in the axial direction (direction of arrows A - B) of the press member 8. When the press member 8 moves in a direction to move the detection body 1a backward, i.e., in the direction of an arrow A, the detection body 1a moves in the direction of arrow A through the washer 13 and snap ring 10 against the spring force of the compression coil spring 12, and is retracted into the potentiometer 1. When the moving amount of the detection body 1a in the direction A reaches a preset plate register adjustment amount, the driving operation of the motor is stopped, so the movement of the plate cylinder 20 is stopped and the movement of the press member 8 is also stopped.

When the press member 8 moves in the extending direction of the detection body 1a, i.e., in the direction of arrow B, the detection body 1a is extended by the spring force of the compression coil spring 12 to follow the press member 8. In other words, with the washer 13 being urged against the bottom surface of the recess 8a of the press member 8, the compression coil spring 12 biases the detection body 1a in the extending direction through the spring guide 11 and snap ring 10. Thus, the detection body 1a moves in the direction of arrow B together with the press member 8.

Despite the movement of the press member 8 in the direction of arrow B, if the detection body 1a does not extend because ink, paper dust, powder, or the like is clogged in a portion C between the potentiometer 1 and detection body 1a, that is, if the stationary frictional force generated by the ink, paper dust, or the like is larger than the spring force of the compression coil spring 12 (temporary locked state), only the press member 8 moves in the direction of arrow B. The press member 8 moves slightly by an amount corresponding to the clearance δ to abut against the washer 15, and then biases the detection body 1a in the direction of arrow B through the washer 15 and snap ring 14. Thus, the temporarily locked detection body 1a is forced to start moving in the direction of arrow B, so that it moves smoothly at the portion C.

Along with the forced movement of the detection body 1a, the compression coil spring 12 is extended by its own spring force to urge the washer 13 against the bottom surface of the recess 8a of the press member 8 again through the spring guide 11 and snap ring 10. Thus, the washer 13 is restored to a normal state wherein it is urged by the compression coil spring 12 against the press member 8, and the washer 13 and press member 8 integrally move by a predetermined amount in the direction of arrow B.

When the detection body 1a is locked and the press member 8 has moved in the direction of arrow A, the detection body 1a is biased in the compression direction of the compression coil spring 12 through the washer 13 and snap ring 10, so the detection body 1a is unlocked in the same manner as that described above.

In this embodiment, when the press member 8 moves in a direction to bias the compression coil spring 12, even if the detection body 1a does not extend, the movement of the press member 8 is transmitted to the detection body 1a through the snap ring 14. This forcibly moves the detection body 1a, so the detection body 1a moves reliably to follow the press member 8. As a result, the moving amount of the press member 8 can be detected reliably, so that plate register adjustment of the plate cylinder 20 is performed reliably, and the reliability of plate register adjustment is improved.

After the press member 8 moves, the washer 13 is urged against the press member 8, in the same manner as in the state before the press member 8 starts moving, and the relative position relationship between the press member 8 and detection body 1a becomes identical to that obtained before the press member 8 starts moving. Despite the clearance δ between the press member 8 and washer 15, the moving amount of the press member 8 becomes equal to that of the detection body 1a, and the detection body 1a correctly detects the moving amount of the press member 8.

When the distance D between the potentiometer 1 and press member 8 is to be adjusted, the fastened nut 5 is loosened, and the fastened bolt 6 is loosened to separate the holder 4 from the adjuster bolt 3 to which it has been fixed. Subsequently, the adjuster bolt 3 is rotated clockwise/counterclockwise by a spanner or the like, thereby adjusting the projection height T of the adjuster bolt 3. When adjustment is ended, the nut 5 is fastened to fix the adjuster bolt 3 to the bracket 2, and the bolt 6 is fastened to fix the holder 4 to the adjuster bolt 3. In this manner, when detecting the moving amount of the press member 8 with the detection body 1a, the distance D between the potentiometer 1 and press member 8 can be adjusted to the optimal value. Therefore, the detection body 1a can detect the moving amount of the press member 8 correctly and reliably.

In the above embodiment, the potentiometer 1 is fixed to the bracket 2 as a stationary side, and the press member 8 is provided to the plate cylinder 20 side as the detection target side. Alternatively, the potentiometer 1 may be provided to the plate cylinder 20 side, and the press member 8 may be fixed to the bracket 2.

In the above embodiment, the compression coil spring 12 urges one washer 13 against the press member 8 with its spring force, so the detection body 1a moves to follow the movement of the press member 8. Alternatively, no clearance δ may be provided between the press member 8 and the other washer 15, but the press member 8 may be sandwiched by the two washers 13 and 15, and the press member 8 and detection body 1a may be directly connected to each other through the two washers 13 and 15. In this case, the compression coil spring 12 becomes unnecessary.

The above embodiment exemplifies a case in the printing press wherein plate register adjustment of the plate cylinder 20 is controlled by the potentiometer 1. However, the present invention is not limited to this, but can also be applied to position detection apparatuses for various types of movable bodies that move linearly.

As has been described above, according to the present invention, as the operational member moves, the detection body is also forced to move. Thus, the detection body is moved reliably. As a result, the reliability of the position detection precision for the movable body is improved. Since the distance between the detection means and operational member can be adjusted, detection can be performed correctly and reliably.

## Claims

1. A moving amount detection apparatus for a movable body, **characterized by** comprising:
an operational member (8) provided to either one of a stationary member (2) and a movable body (20) a moving amount of which is to be controlled;
a detection body (1a) connected to said operational member; and
detection means (1), provided to the remaining one of said stationary member and said movable body, for detecting the moving amount of said movable body on the basis of a displacement of said movable body relative to said detection body,
wherein one of said operational member and said detection member displaces in accordance with movement of said movable body.

2. An apparatus according to claim 1, wherein
said detection means comprises a potentiometer fixed to said stationary member,
said operational member displaces together with said movable body, and
said detection body comprises a rod-like member which moves forward from and backward into said potentiometer in accordance with displacement of said operational member.

3. An apparatus according to claim 2, wherein said apparatus further comprises
a spring (12) for biasing said detection body in a direction to extend from said potentiometer, and
a pair of stopping members (10, 14) fixed to said detection body at a predetermined distance therebetween, and
said operational member is connected to said detection body between said stopping members, and urges said detection body, along with movement of said movable body, through said stopping members in a direction to extend from and be retracted into said potentiometer.

4. An apparatus according to claim 3, further comprising
a pair of washers (13, 15) each provided between said operational member and a corresponding one of said stopping members while said washers are loosely fitted on said detection body on which said operational member is mounted movably in an axial direction thereof,
said operational member and said washers forming a predetermined gap therebetween.

5. An apparatus according to claim 3, wherein
said apparatus further comprises a pair of ring-like spring guides (9, 11) movably supported by said detection body between said operational member and said potentiometer,
said spring being mounted on said detection body between said spring guides, and
one of said spring guides urging said operational member in an extending direction of said detection body through one of said stopping members.

6. An apparatus according to claim 1, further comprising a position adjustment mechanism (3 - 6) for positionally adjusting one of said detection means and said operational member in a moving direction of said detection body.

7. An apparatus according to claim 1, wherein said movable body is a plate cylinder, and
said operational member moves in accordance with movement of said plate cylinder in an axial direction.
